(19) **Europäisches Patentamt / European Patent Office / Office européen des brevets**

(11) **EP 2 785 517 B1**

(12) **FASCICULE DE BREVET EUROPEEN**

(45) Date de publication et mention de la délivrance du brevet:
**22.06.2016 Bulletin 2016/25**

(21) Numéro de dépôt: **12798661.0**

(22) Date de dépôt: **28.11.2012**

(51) Int Cl.:
**B29D 30/06** $^{(2006.01)}$    **B29C 33/20** $^{(2006.01)}$

(86) Numéro de dépôt international:
**PCT/EP2012/073856**

(87) Numéro de publication internationale:
**WO 2013/079543 (06.06.2013 Gazette 2013/23)**

(54) **MOULE AUTOBLOCANT POUR PNEUMATIQUES COMPRENANT DES MOYENS DE LIMITATION D'EFFORT.**

SELBSTVERRIEGELNDE REIFENFORM MIT EINEM KRAFTBEGRENZUNGSMITTEL

SELF-LOCKING TYRE MOULD INCLUDING A FORCE-LIMITING MEANS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.11.2011 FR 1160965**

(43) Date de publication de la demande:
**08.10.2014 Bulletin 2014/41**

(73) Titulaires:
• **Compagnie Générale des Etablissements Michelin**
**63000 Clermont-Ferrand (FR)**
• **MICHELIN Recherche et Technique S.A.**
**1763 Granges-Paccot (CH)**

(72) Inventeurs:
• **FERRAND, Jean-Charles**
**F-63040 Clermont-Ferrand Cedex 9 (FR)**
• **APERCE, Jean-Claude**
**F-63040 Clermont-Ferrand Cedex 9 (FR)**
• **MONDOLO, Adrien**
**F-63040 Clermont-Ferrand Cedex 9 (FR)**

(74) Mandataire: **Noel, Luminita**
**Manufacture Française**
**Des Pneumatiques Michelin**
**DGD/PI F35/Ladoux**
**23, Place des Carmes-Déchaux**
**63040 Clermont-Ferrand Cedex 9 (FR)**

(56) Documents cités:
**EP-A1- 0 436 495      EP-A1- 1 918 087**
**FR-A5- 2 087 540      US-A- 5 304 270**

# Description

L'invention concerne le domaine de la fabrication des pneumatiques et plus particulièrement la vulcanisation des pneumatiques de grande largeur à l'aide de moules dits autobloquants.

Les moules usuels sont constitués de plusieurs pièces séparées qui, par rapprochement relatif, délimitent un espace de moulage sensiblement toroïdal. Ils comportent essentiellement deux coquilles pour le moulage des flancs du pneumatique, et plusieurs secteurs périphériques situés entre les coquilles pour le moulage de la bande de roulement. Le rapprochement de toutes ces pièces est assuré par un mécanisme externe au moule.

L'ébauche crue du pneumatique à vulcaniser est introduite dans le moule, et une membrane de cuisson vient plaquer fermement le pneumatique contre le moule de manière à imprimer la sculpture de la bande de roulement et obtenir un pneumatique vulcanisé de dimensions précises. La pression exercée par le pneumatique sur les pièces de moule est reprise par des mécanismes qui reportent les efforts sur le châssis de la presse de cuisson afin de maintenir le moule fermé pendant toute la durée de la cuisson.

Plus particulièrement, l'invention s'intéresse aux moules dits autobloquants qui ont la particularité de comporter des coquilles et des secteurs qui coopèrent pour résister à la pression de sorte que les pièces du moule restent en position de fermeture sans le concours de pièces externes additionnelles de calage ou de maintien.

La publication EP 0 436 495, ou encore la publication EP 1 918 087, décrivent un moule de ce type, dans lequel chaque secteur comporte à ses bords latéraux une saillie s'étendant radialement vers l'intérieur du moule et munie d'un rebord s'étendant axialement vers l'intérieur du moule. L'extrémité radialement extérieure de chaque coquille est terminée par un volume complémentaire comportant une saillie munie d'un rebord. Lesdits rebords coopèrent pour maintenir le moule fermé lorsque celui-ci est soumis à une pression interne tendant à écarter axialement les coquilles l'une de l'autre et à reculer radialement les secteurs.

A cet effet, le moule comporte des surfaces d'appui tronconiques sur les rebords des dits secteurs et desdites coquilles. Lesdites surfaces tronconiques sont inclinées d'un angle $\alpha$ par rapport à l'axe du moule, de sorte que les prolongements de la trace de ces surfaces tronconiques sur un plan méridien se coupent du coté radialement intérieur du secteur considéré.

Pour que le moule reste toujours fermé, l'angle $\alpha$ est calculé de manière à ce que l'effet de la pression interne sur les coquilles qui tend à rapprocher les secteurs vers le centre du moule, soit prépondérant par rapport à l'effet de la pression interne sur les secteurs qui tend à écarter radialement les secteurs et, par transmission des efforts radiaux par l'intermédiaire des surfaces tronconiques, à rapprocher les coquilles l'une vers l'autre.

L'angle $\alpha$ est sensiblement déterminé par le rapport de la surface des coquilles soumise à la pression interne et de la surface des secteurs soumis à ladite pression. On observera que ce rapport correspond au rapport du diamètre du moule au niveau du point d'emboitage et de la largeur du moule au sommet.

De la sorte, plus la pression interne est élevée, plus les forces de fermeture du moule sont importantes. Ce type de moule est donc plus communément désigné sous l'appellation de moule autobloquant.

Toutefois, la conception d'un moule de ce type n'est pas sans connaître quelques difficultés. En effet, les forces mises en jeu sont relativement élevées, et le dimensionnement des pièces est adapté pour assurer le moins de jeux possible. Aussi, il peut en résulter un moule dont les pièces sont massives et, par voies de conséquences, plus coûteuses.

Ainsi, plus la bande de roulement sera large par rapport au flanc, plus l'angle $\alpha$ devra être réduit, avec pour conséquence une augmentation importante de la taille des saillies destinées à coopérer par l'intermédiaire des surfaces tronconiques.

L'invention a pour objet de proposer un moyen permettant de limiter les efforts appliqués au niveau des saillies afin d'en limiter le dimensionnement.

Le moule a secteur selon l'invention est du type autobloquant comportant des coquilles et des secteurs coopérant pour résister à la pression interne et rester en position de fermeture sans le concours de pièces additionnelles, dans lequel chaque secteur comporte à ses bords latéraux une saillie s'étendant radialement vers l'intérieur, munie d'un rebord s'étendant axialement vers l'intérieur du moule et présentant une surface tronconique inclinée d'un angle $\alpha$ par rapport à l'axe du moule de telle sorte que les prolongements de la trace de chaque surface tronconique sur un plan méridien se coupent du coté radialement intérieur du secteur considéré et dans lequel chaque coquille comporte une saillie s'étendant radialement vers l'extérieur munie d'un rebord présentant une surface tronconique inclinée d'un même angle $\alpha$ par rapport à l'axe XX' du moule.

Ce moule se caractérise en ce qu'il comporte des moyens de limitation d'effort composés d'une butée et d'un logement disposés respectivement dans le prolongement radial de chacune des saillies et possédant chacun une portée, lesdites portées étant destinées à venir en contact l'une de l'autre lorsque la pression interne dans le moule dépasse un seuil donné.

Lorsque la pression augmente, les forces exercées entre la coquille et les secteurs par l'intermédiaire des surfaces tronconiques ont tendance à faire pénétrer la saillie de la coquille dans la saillie des secteurs, en augmentant comme on l'a déjà vu les forces de serrage et l'effet de coin exercé sur les saillies et lié à la nature tronconique des surfaces en contact.

Lorsque les portées des butées viennent en contact avec les portées des logements, on limite cet effet de coin, et on partage la transmission des efforts entre les portées des butées et les surfaces tronconiques. L'effort exercé sur les saillies s'en trouve réduit d'autant, ce qui permet de réduire les épaisseurs de matière nécessaires pour contenir les efforts liés à la pression.

Selon une première alternative de réalisation de l'invention, la butée et le logement sont disposés du coté radialement externe des saillies de la coquille et des secteurs de sorte que la portée axialement externe de la butée coopère avec la portée axialement externe du logement.

Selon une deuxième alternative de réalisation de l'invention, la butée et le logement sont disposés du coté radialement interne des saillies de la coquille et des secteurs de sorte que la portée axialement interne de la butée coopère avec la portée axialement interne du logement.

Avantageusement, le jeu axial entre les portées de la butée et du logement, lorsque les faces de chacune des saillies entrent en contact l'une de l'autre, peut être compris entre 0, 05 mm et 1 mm.

Alternativement on peut définir jeu axial entre les portées de la butée et du logement lorsque les faces de chacune des saillies entrent en contact l'une de l'autre, de sorte que les portées de la butée et du logement entrent en contact lorsque la pression dans le moule représente préférentiellement 50% à 80% de la pression nominale.

La butée et le logement peuvent s'étendre sur toute la circonférence des saillies, ou la butée peut être formée d'une pluralité de portions de circonférence équiréparties circulairement autour de l'axe du moule et s'étendant radialement depuis une saillie.

Avantageusement, l'angle de la surface tronconique ($\alpha$) des saillies peut être compris entre 10° et 40°et préférentiellement entre 15 et 35°.

Le moule ayant une largeur (L) et un diamètre (J) au point d'emboitage (E), et en considérant, en projection dans un plan méridien passant par l'axe (XX') du moule, la distance (a) comprise entre une droite parallèle à l'axe du moule et passant par le point d'application de la résultante des forces de contact entre les coquilles et les secteurs, et une droite parallèle à l'axe du moule située dans le prolongement de la face interne du secteur résistant on pourra avantageusement, pour réduire l'épaisseur radiale des secteurs résistants, définir la valeur de a de sorte qu'elle soit égale à

$$k * 0,42 * D_s \left(\frac{L}{J}\right)^2,$$ avec un coefficient k compris entre 0,8 et 1,4

La description qui suit s'appuie sur les figures 1 à 4 dans lesquelles :

- la figure 1 est une demi vue en coupe radiale d'un moule selon l'invention selon une première alternative de réalisation,
- la figure 2 est une demi vue en coupe radiale d'un moule selon l'invention selon une seconde alternative de réalisation
- les figures 3 et 4 illustrent un perfectionnement de réalisation d'un moule selon l'invention selon chacune des deux alternatives.

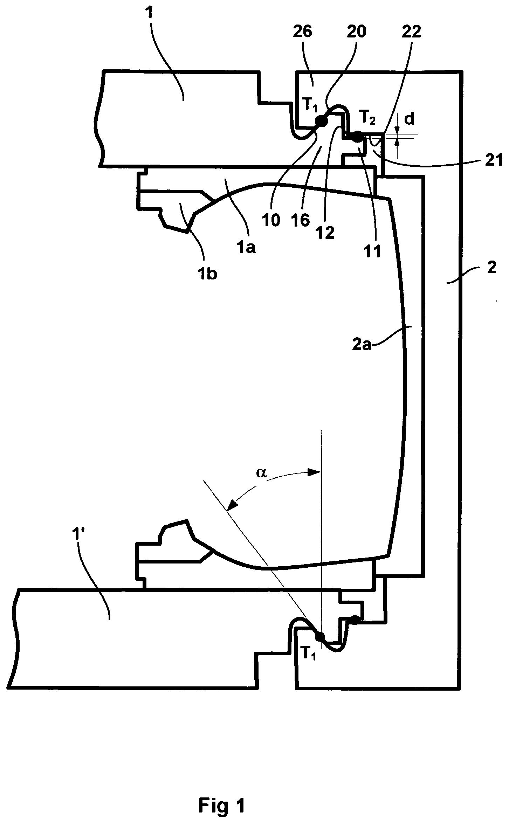

La figure 1, représente une demi vue en coupe radiale d'un moule selon l'invention. Le moule comprend une coquille supérieure 1 et une coquille inférieure 1' de formes circulaires. Des secteurs résistants 2, sont répartis circonférentiellement autour des coquilles 1 et1'.

Les coquilles et les secteurs sont associés à des moyens d'ouverture et de fermeture (non représentés) aptes à déplacer les coquilles dans la direction axiale, et à déplacer les secteurs dans la direction radiale. Le moule de la figure 1 est donc représenté dans la position fermée, correspondant à la position dans laquelle les forces de pression internes agissent sur les coquilles et les secteurs.

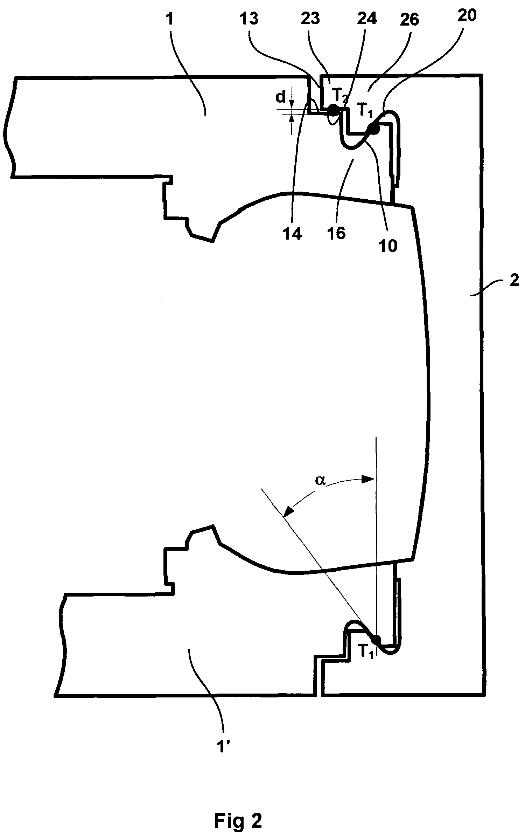

Comme cela est illustré à la figure 1, les coquilles peuvent être formées d'une partie résistante 1 supportant des pièces non résistantes, 1a et 1b dont la partie interne est destiné à venir en contact avec le pneumatique pour mouler la zone flanc (1a) ou la partie basse (1b). On entend ici par non résistant des pièces ne participant pas ou faiblement à la résistance mécanique du moule sous l'effet des forces de pression. Il va donc de soi que les parties moulantes 1a et 1 b peuvent être réalisées venant de matière avec la coquille 1, comme cela est illustré à la figure 2, ou séparément, comme cela est illustré à la figure 1, pour permettre une certaine adaptation dimensionnelle du moule.

De la même manière, les secteurs comportent une partie résistante 2, et une sculpture 2a destinée à mouler la bande de roulement du pneumatique. La pièce 2a peut également venir de matière avec la partie résistante 2, comme cela est illustré à la figure 2, et former alors une seule pièce résistante.

Chaque secteur comporte à son bord latéral supérieur et inférieur une saillie 26 s'étendant radialement vers l'intérieur et munie d'un rebord s'étendant également axialement vers l'intérieur du moule et présentant une surface tronconique 20 sur un plan méridien passant par l'axe XX'. La surface tronconique 20 fait un angle $\alpha$ avec la direction axiale du moule. Les prolongements de la trace de chaque surface tronconique dans le plan méridien se coupent du coté radialement intérieur du moule. En position fermée, comme cela est illustré à la figure 1, la prolongation des surfaces tronconiques forme un cône dont le sommet est porté par l'axe XX'.

Chaque coquille 1 comporte une saillie 16 s'étendant radialement vers l'extérieur et munie d'un rebord présentant une surface tronconique 10 inclinée d'un même angle $\alpha$ par rapport à l'axe XX' du moule.

En position fermée, les surfaces tronconiques 20 et 10 sont placées en vis-à-vis en contact l'une de l'autre de manière à reprendre les efforts de fermeture engendrés par la pression qui s'exerce sur les coquilles et les secteurs.

L'angle α est déterminé de sorte que les forces exercées par les coquilles au niveau des surfaces coniques, aient tendance à refermer le moule, en s'opposant aux forces exercées par les secteurs. En première approximation, on s'arrange pour que Tgα reste inférieur au rapport $\dfrac{J}{2L}$. Les valeurs de l'angle a sont en règle générale comprises entre 10° et 40°, et préférentiellement entre 15° et 35°.

On observera ici qu'un angle trop fermé entraine une augmentation des effets de coin et donc des épaisseurs des saillies, et ne permet pas de compenser les jeux entre les secteurs et les coquilles. Aussi, en pratique on définira un angle α légèrement inférieur à la limite imposée ci-dessus.

Selon une première alternative de réalisation de l'invention, illustrée à la figure 1, la coquille 1 comporte une butée 11 située dans le prolongement radialement externe de la saillie 16. Cette butée collabore avec un logement 21 situé radialement à l'extérieur de la saillie 26 des secteurs. La surface axialement externe de la butée 11 définie une portée 12 destinée à venir en contact avec la portée 22 définie par la surface radialement externe du logement 21, lorsque la pression augmente et que la saillie de la coquille pénètre dans la saillie des secteurs.

La seconde alternative de réalisation de l'invention, équivalente à la première et illustrée à la figure 2, consiste à disposer la butée 23 dans le prolongement radialement interne des saillies 26 des secteurs 2. Le logement 13 est situé sur la coquille 1 radialement à l'intérieur par rapport à la saillie 16. La surface axialement interne de la butée 23 définie une portée 24 destinée à venir en contact avec la portée 14 définie par la surface radialement interne du logement 13.

Le jeu entre les portées 12 et 22 ou entre les portées 14 et 24 est défini par la distance d entre les portées au moment de la mise en contact des surfaces tronconiques lors de la fermeture. Ce jeu peut utilement être compris entre 0,05 mm et 1 mm selon la taille du moule.

On peut aussi calculer le jeu pour que les portées de la butée et du logement entrent en contact lorsque la pression dans le moule atteint une valeur prédéterminée de la pression nominale. A titre préférentiel, cette valeur peut représenter préférentiellement 50% à 80 % de la valeur de la pression

La butée ou le logement s'étendent en règle générale sur toute la circonférence de la coquille et des secteurs. Toutefois, il est possible d'imaginer des butées s'étendant sur des portions de circonférence collaborant avec des logements s'étendant sur toute la circonférence ou sur des portions de la circonférence de la coquille ou des secteurs et situés en vis-à-vis des butées avec lesquelles ils sont destinés à entrer en contact.

Un perfectionnement de l'invention consiste à ajuster la géométrie des secteurs pour tirer parti des couples engendrés par les forces de serrage s'exerçant entre les surfaces tronconiques, et entre les portées des butées et des logements.

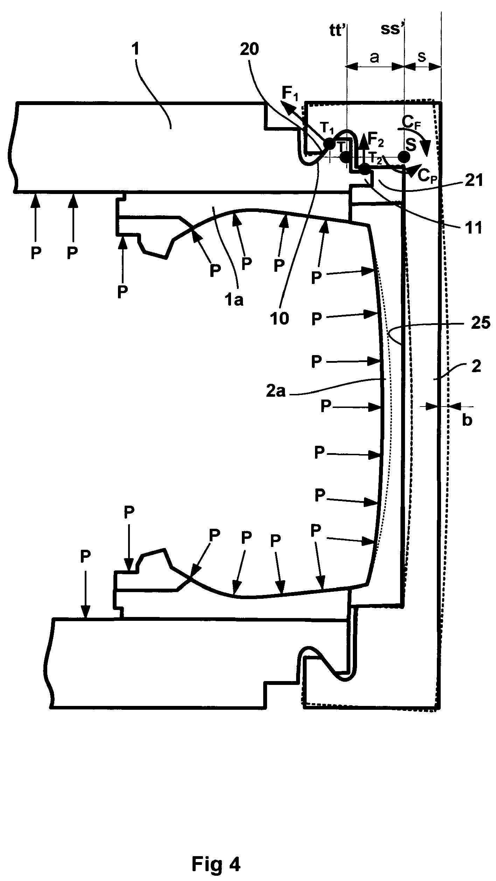

En référence à la figure 4, on observe en effet que les forces de pression engendrent un bombé b orienté radialement vers l'extérieur du moule. Cette déformation a pour effet d'augmenter la circonférence du moule dans le plan équatorial et par voie de conséquence de provoquer l'apparition de jeux entre les secteurs. Connaissant la tolérance de jeu admise pour éviter l'apparition de bavures de gomme, il est alors aisé de déterminer l'épaisseur s du secteur résistant pour limiter la flèche b à une valeur admissible. Toutefois, un calcul hâtif peut conduire à des épaisseurs s très importantes.

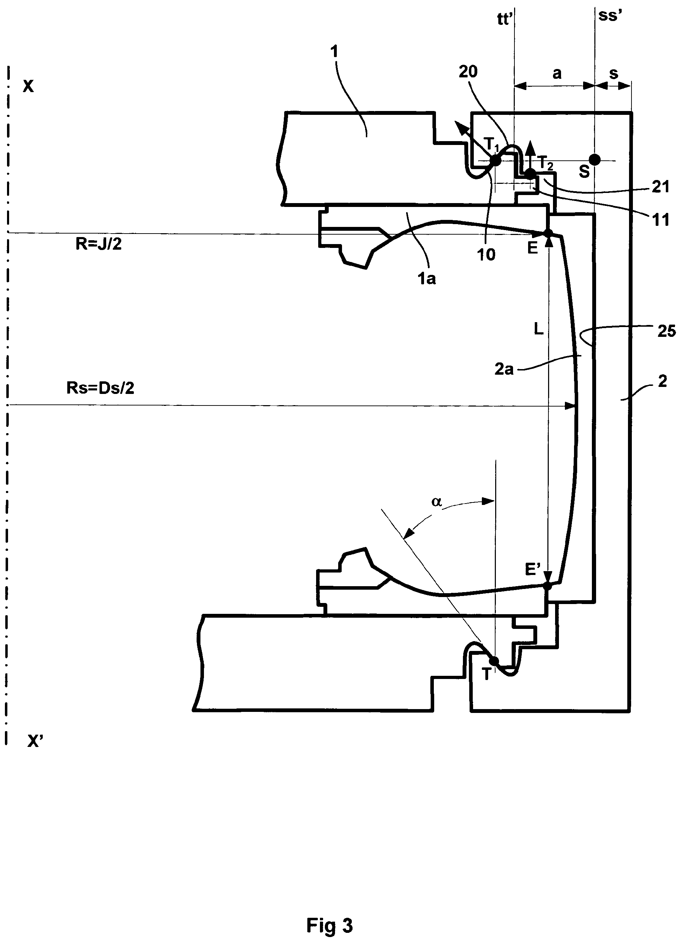

En référence à la figure 3, on définit le point d'emboitage E comme le point de contact, au niveau de la partie moulante, entre la coquille 1 et les secteurs 2, Ce point d'emboitage limite la zone où s'exercent les forces de pression agissant sur la coquille de la zone où s'exercent les forces de pression agissant sur les secteurs.

La distance axiale entre les points d'emboitage supérieur et inférieur est notée L. Le rayon au point d'emboitage $R_E$ correspond à la moitié du diamètre J. Le rayon $R_S$ correspond à la moitié du diamètre du moule $D_S$ au niveau de l'équateur.

Les forces de fermeture s'appliquent au point $T_1$ ($F_1$) situé entre les deux surfaces tronconiques 10 et 20, et au point de contact $T_2$ ($F_2$) entre les portées des butées et des logements, respectivement 12 et 22 ou 14 et 24. Le point T, défini comme le point d'application de la résultante des forces F s'exerçant entre la coquille et les secteurs est situé entre les points $T_1$ et $T_2$.

Dans le plan méridien passant par l'axe XX', on trace la droite tt' passant par le point T et parallèle à l'axe XX'. Cette droite est sensiblement la médiatrice des droites parallèles à l'axe XX' passant par $T_1$ et $T_2$. On observera ici que le même raisonnement est applicable pour les deux alternatives de réalisation de l'invention.

Dans ledit plan méridien, on trace une droite ss' qui prolonge la trace de l'intersection de la partie radialement interne 25 du secteur résistant 2 avec ledit plan méridien.

Lorsque la partie moulante 2a est confondue avec le secteur résistant 2, la droite ss' est alors assimilée à la droite parallèle à l'axe XX' et tangente au sommet du moule, et correspond sensiblement à la droite passant au point d'intersection du moule avec un plan équatorial et parallèle à l'axe XX'. L'intersection de la droite ss' avec une droite perpendiculaire à l'axe XX' et passant par le point T se fait au point S.

La distance a correspond à la distance (radiale) entre les droites tt' et ss'.

En référence à la figure 3 on détermine alors au point S, le couple $C_F$ exercé par la résultante F des forces de fermeture au point T avec le bras de levier a, et le couple $C_P$ correspondant au couple exercé par les forces de pression sur le secteur résistant 2.

On observe que ces deux couples s'opposent, et sont directement proportionnels à la pression P et aux caractéristiques géométriques du moule, représentées par les valeurs de $D_S$, J, et L. Les couples $C_P$ et $C_F$ sont indépendant de la valeur de l'angle $\alpha$.

Pour que ces deux couples s'équilibrent approximativement, c'est-à-dire pour que le bombé b au dos des secteurs soit sensiblement égal à zéro, on détermine une valeur de a telle que

$$a = 0,42 * D_s \left(\frac{L}{J}\right)^2.$$

On peut alors opter pour une première approche qui consiste, pour une valeur s d'épaisseur des secteurs résistants, à réduire la valeur du bras de levier a par rapport à la valeur à l'équilibre pour obtenir un bombé b dont la valeur donne un écartement circonférentiel des secteurs égal à la tolérance maximale correspondant à l'apparition de bavures entre les secteurs. Auquel cas, on prendra une valeur de a correspondant à 0,9 fois, voire 0,8 fois la valeur de a à l'équilibre.

Une autre façon de procéder consiste au contraire à augmenter la valeur de a par rapport à la valeur à l'équilibre, de manière à obtenir un bombé « négatif », c'est-à-dire orienté radialement vers l'intérieur du moule, ce qui revient en fait à augmenter le frettage circonférentiel des secteurs les uns contre les autres de manière à compenser l'absence d'anneau de frettage externe disposé au dos des secteurs. Auquel cas, on choisira une valeur de a supérieure à la valeur de a à l'équilibre, soit 1,3 voire 1,4 fois cette valeur.

La combinaison de l'invention avec le perfectionnement décrit ci-dessus permet d'optimiser les quantités de matière nécessaires pour maintenir le moule dans les limites de déformations imposées par les règles de fabrication des pneumatiques, et procure un avantage compétitif tout à fait considérable.

## Revendications

**1.** Moule à secteurs pour le moulage et la vulcanisation d'un pneumatique de diamètre donné ($D_S$), comportant des coquilles (1, 1') et des secteurs (2) coopérant pour résister à la pression interne et rester en position de fermeture sans le concours de pièces additionnelles, dans lequel chaque secteur (2) comporte à ses bords latéraux une saillie (26) s'étendant radialement vers l'intérieur, munie d'un rebord s'étendant axialement vers l'intérieur du moule et présentant une surface tronconique (20) inclinée d'un angle $\alpha$ par rapport à l'axe (XX') du moule de telle sorte que les prolongements de la trace de chaque surface tronconique sur un plan méridien se coupent du coté radialement intérieur du secteur considéré, et dans lequel chaque coquille (1, 1') comporte une saillie (16) s'étendant radialement vers l'extérieur munie d'un rebord présentant une surface tronconique (10) inclinée d'un même angle $\alpha$ par rapport à l'axe XX' du moule, **caractérisé en ce que** le moule comporte des moyens de limitation d'effort composés d'une butée (11, 23) et d'un logement (21, 13) disposés respectivement dans le prolongement radial de chacune des saillies (16, 26) et possédant chacun une portée (12, 22, 14, 24), lesdites portées étant destinées à venir en contact l'une de l'autre lorsque la pression interne dans le moule dépasse un seuil donné.

**2.** Moule selon la revendication 1, dans lequel la butée (11) et le logement (21) sont disposés du coté radialement externe des saillies de la coquille (16) et des secteurs (26) de sorte que la portée (12) axialement externe de la butée (11) coopère avec la portée (22) axialement externe du logement (21).

**3.** Moule selon la revendication 1, dans lequel la butée (23) et le logement (13) sont disposés du coté radialement interne des saillies de la coquille (16) et des secteurs (26) de sorte que la portée ((24) axialement interne de la butée (23) coopère avec la portée (14) axialement interne du logement (13).

**4.** Moule selon l'une des revendications 1 à 3, dans lequel le jeu axial entre les portées de la butée (12, 14) et du logement (22, 14), lorsque les faces (10, 20) de chacune des saillies entrent en contact l'une de l'autre, est compris entre 0, 05mm et 1mm.

**5.** Moule selon l'une des revendications 1 à 3, dans lequel le jeu axial entre les portées de la butée (12, 14) et du logement (22, 14), lorsque les faces (10, 20) de chacune des saillies entrent en contact l'une de l'autre est ajusté de sorte que les portées de la butée et du logement entrent en contact lorsque la pression dans le moule représente une valeur comprise entre 50% et 80% de la pression nominale.

**6.** Moule selon l'une des revendications 1 à 5, dans lequel la butée et le logement s'étendent sur toute la circonférence des saillies.

**7.** Moule selon l'une des revendications 1 à 5, dans lequel la butée est formée d'une pluralité de portions de circonférence équi-réparties circulairement autour de l'axe du moule et s'étendant radialement depuis une saillie.

**8.** Moule selon l'une des revendications 1 à 7, dans lequel l'angle ($\alpha$) de la surface tronconique (10, 20) des saillies avec la direction axiale (XX') est compris entre 10° et 40°, et préférentiellement entre 15 et 35°.

9. Moule selon l'une des revendications 1 à 8, ayant un diamètre au sommet ($D_S$), une largeur (L) et un diamètre (J) au point d'emboitage (E) de valeurs données, et dans lequel, en projection dans un plan méridien passant par l'axe (XX') du moule, la distance (a) comprise entre une droite (tt') parallèle à l'axe du moule et passant par le point d'application (T) de la résultante des forces de contact entre les coquilles et les secteurs, et une droite (ss') parallèle à l'axe du moule située dans le prolongement de la face interne du secteur résistant est égale à

$$k * 0{,}42 * D_s \left( \frac{L}{J} \right)^2 \text{, avec un coefficient k compris entre 0,8 et 1,4.}$$

**Patentansprüche**

1. Segmentierte Form für das Formen und Vulkanisieren eines Reifens mit gegebenem Durchmesser ($D_S$), aufweisend Schalen (1, 1') und Segmente (2), welche zusammenwirken, um dem Innendruck zu widerstehen und ohne Zuhilfenahme zusätzlicher Teile in geschlossener Position zu bleiben, bei welcher jedes Segment (2) an seinen seitlichen Rändern einen Vorsprung (26) aufweist, welche sich radial in das Innere erstrecken, mit einem sich axial ins Innere erstreckenden Rand versehen sind und eine kegelstumpfartige Fläche (20) aufweisen, welche um einen Winkel $\alpha$ in Bezug auf die Achse (XX') der Form derartig geneigt ist, dass sich die Verlängerungen der Linie jeder kegelstumpfartigen Fläche in einer Mittelebene auf der radial inneren Seite des betrachteten Segments schneiden, und bei welcher jede Schale (1, 1') einen Vorsprung (16) aufweist, welcher sich radial nach außen erstreckt, der mit einem Rand versehen ist, welcher eine kegelstumpfartige Fläche (10) aufweist, die um denselben Winkel $\alpha$ in Bezug auf die Achse XX' der Form geneigt ist, **dadurch gekennzeichnet, dass** die Form Mittel zur Begrenzung der Beanspruchung aufweist, welche aus einem Anschlag (11, 23) und einer Aufnahme (21, 13) zusammengesetzt sind, welche jeweils in der radialen Verlängerung jedes Vorsprungs (16, 26) angeordnet sind und jeweils eine Anlagefläche (12, 22, 14, 24) besitzen, wobei die Anlageflächen dafür vorgesehen sind, miteinander in Kontakt zu gelangen, wenn der Innendruck in der Form einen gegebenen Schwellenwert überschreitet.

2. Form nach Anspruch 1, bei welcher der Anschlag (11) und die Aufnahme (21) auf der radial äußeren Seite der Vorsprünge der Schale (16) und der Segmente (26) derartig angeordnet sind, dass die axial äußere Anlagefläche (12) des Anschlags (11) mit der axial äußeren Anlagefläche (22) der Aufnahme (21) zusammenwirkt.

3. Form nach Anspruch 1, bei welcher der Anschlag (23) und die Aufnahme (13) auf der radial inneren Seite der Vorsprünge der Schale (16) und der Segmente (26) derartig angeordnet sind, dass die axial innere Anlagefläche (24) des Anschlags (23) mit der axial inneren Anlagefläche (14) der Aufnahme (13) zusammenwirkt.

4. Form nach einem der Ansprüche 1 bis 3, bei welcher das axiale Spiel zwischen den Anlageflächen des Anschlags (12, 14) und der Aufnahme (22, 14) zwischen 0,05 mm und 1 mm liegt, wenn die Flächen (10, 20) jeder der Vorsprünge in Kontakt gelangen.

5. Form nach einem der Ansprüche 1 bis 3, bei welcher das axiale Spiel zwischen den Anlageflächen des Anschlags (12, 14) und der Aufnahme (22, 14), wenn die Flächen (10, 20) jeder der Vorsprünge in Kontakt gelangen, derartig eingestellt ist, dass die Anlageflächen des Anschlags und der Aufnahme in Kontakt gelangen, wenn der Druck in der Form einen Wert aufweist, welcher zwischen 50% und 80% des Nominaldrucks liegt.

6. Form nach einem der Ansprüche 1 bis 5, bei welcher sich der Anschlag und die Ausnehmung über den gesamten Umfang der Vorsprünge erstrecken.

7. Form nach einem der Ansprüche 1 bis 5, bei welcher der Anschlag von einer Vielzahl von Umfangsabschnitten gebildet wird, welche gleichmäßig, kreisförmig um die Achse der Form verteilt sind und sich radial von einem Vorsprung aus erstrecken.

8. Form nach einem der Abschnitte 1 bis 7, bei welcher der Winkel ($\alpha$) zwischen der kegelstumpfförmigen Fläche (10, 20) der Vorsprünge und der axialen Richtung (XX') zwischen 10° und 40°, und vorzugsweise zwischen 15 und 35°, liegt.

9. Form nach einem der Ansprüche 1 bis 8, welche einen Durchmesser am Scheitel ($D_S$), eine Breite (L) und einen Durchmesser (J) am Einpassungspunkt (E) von gegebenen Werten besitzt, und bei welcher bei der Projektion in eine Mittelebene, welche durch die Achse (XX') der Form verläuft, der Abstand (a), welcher zwisc8hen einer Gerade (tt'), welche parallel zur Achse der Form und durch den Punkt (T) verläuft, an dem die Resultierende der Kontaktkräfte zwischen den Schalen und den Segmenten angreift, und einer Gerade (ss') liegt, welche parallel zur Achse der Form verläuft und in der Verlängerung der Innenfläche des widerstehenden Segmentes angeordnet ist, gleich $k*0,42*D_s\left(\dfrac{L}{J}\right)^2$ ist, wobei ein Koeffizient k zwischen 0,8 und 1,4 liegt.

## Claims

1. Segmented mould for moulding and vulcanizing a tyre of given diameter ($D_S$), comprising shells (1, 1') and segments (2) collaborating to withstand the internal pressure and remain in the closed position without assistance from additional components, in which mould each segment (2) comprises at its lateral edges a projection (26) extending radially inwards, which projection is equipped with a lip extending axially towards the inside of the mould and having a frustoconical surface (20) inclined at an angle $\alpha$ with respect to the axis (XX') of the mould such that the extensions of the line of each frustoconical surface on a meridian plane intersect on the radially internal side of the segment concerned, and in which mould each shell (1, 1') comprises a projection (16) extending radially outwards and provided with a lip having a frustoconical surface (10) inclined by the same angle $\alpha$ with respect to the axis XX' of the mould, **characterized in that** the mould comprises force-limiting means made up of a stop (11, 23) and of a housing (21, 13) positioned respectively in the radial extension of each of the projections (16, 26) and each having a bearing surface (12, 22, 14, 24), the said bearing surfaces being intended to come into contact with one another when the internal pressure in the mould exceeds a given threshold.

2. Mould according to Claim 1, in which the stop (11) and the housing (21) are positioned on the radially external side of the projections of the shell (16) and of the segments (26) so that the axially external bearing surface (12) of the stop (11) collaborates with the axially external bearing surface (22) of the housing (21).

3. Mould according to Claim 1, in which the stop (23) and the housing (13) are positioned on the radially internal side of the projections of the shell (16) and of the segments (26) so that the axially internal bearing surface (24) of the stop (23) collaborates with the axially internal bearing surface (14) of the housing (13).

4. Mould according to one of Claims 1 to 3, in which the axial clearance between the bearing surfaces of the stop (12, 14) and of the housing (22, 14) when the faces (10, 20) of each of the projections come into contact with one another is comprised between 0.05 mm and 1 mm.

5. Mould according to one of Claims 1 to 3, in which the axial clearance between the bearing surfaces of the stop (12, 14) and of the housing (22, 14) when the faces (10, 20) of each of the projections come into contact with one another is tailored so that the bearing surfaces of the stop and of the housing come into contact when the pressure in the mould represents a value of between 50% and 80% of the nominal pressure.

6. Mould according to one of Claims 1 to 5, in which the stop and the housing extend over the entire circumference of the projections.

7. Mould according to one of Claims 1 to 5, in which the stop is formed of a plurality of circumference portions evenly distributed in a circle about the axis of the mould and extending radially from a projection.

8. Mould according to one of Claims 1 to 7, in which the angle ($\alpha$) of the frustoconical surface (10, 20) of the projections with the axial direction (XX') is comprised between 10° and 40° and preferably between 15 and 35°.

9. Mould according to one of Claims 1 to 8, having a diameter at the vertex ($D_S$), and a width (L) and a diameter (J) at the interconnect point (E), all of given values, and in which, in projection onto a meridian plane passing through the axis (XX') of the mould, the distance (a) comprised between a straight line (tt') parallel to the axis of the mould and passing through the point (T) of application of the resultant of the forces of contact between the shells and the segments, and a straight line (ss') parallel to the axis of the mould and situated in the extension of the internal face of the resistant segment is equal to

$$k * 0.42 * D_s\left(\dfrac{L}{J}\right)^2,$$ with a coefficient k comprised between 0.8 and 1.4.

**Fig 1**

**Fig 2**

**Fig 3**

Fig 4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0436495 A

- EP 1918087 A